(19) **Europäisches Patentamt** / **European Patent Office** / **Office européen des brevets**

(11) **EP 4 718 285 A1**

(12) **EUROPEAN PATENT APPLICATION**

(43) Date of publication:
01.04.2026 Bulletin 2026/14

(21) Application number: 24202640.9

(22) Date of filing: 25.09.2024

(51) International Patent Classification (IPC):
*G06F 16/906* (2019.01)    *G06N 3/00* (2023.01)

(52) Cooperative Patent Classification (CPC):
**G06F 16/906; G06N 3/00; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Khoreva, Anna**
**70197 Stuttgart (DE)**
• **Bini, Massimo**
**72072 Tübingen (DE)**

Remarks:
Amended claims in accordance with Rule 137(2) EPC.

(54) **DEVICE, DATA STRUCTURE AND METHOD FOR TUNING WEIGHTS OF A NEURAL NETWORK OF A MODEL**

(57)     Device (100), data structure, and method for tuning weights of a neural network of a model (106) for processing input of the model (106) in particular comprising or representing information about a technical system (108) and outputting an output of the model (106) in particular for operating a technical system (108), wherein the model (106) comprises an in particular linear layer for mapping a multidimensional input of the layer depending on the weights to a multidimensional output of the layer, wherein the model (106) is configured to determine the input of the layer depending on the input of the model (106), wherein the model (106) is configured to determine the output of the model (106) depending on the output of the layer, wherein the method comprises providing training data comprising the input of the model (106) and a ground truth for the output of the model (106) corresponding to the input of the model (106) in the training data, providing a set of tuning methods for tuning the weights, determining the principal components decomposition of a weight matrix comprising the weights, wherein the principal component decomposition comprises a matrix formed by the eigenvectors of the covariance matrix of the weight matrix, determining the eigenvalues of the covariance matrix corresponding to the eigenvectors, rearranging the eigenvectors in the matrix in an order resulting in a monotonically decreasing order of the eigenvalues that are associated with the eigenvectors, rearranging the weights in the weight matrix according to the order in that the eigenvectors are rearranged in the matrix, partitioning the weight matrix into groups of weights, associating at least one group of the groups with a method of tuning selected from the set of tuning methods, and tuning the weights in the at least one group on the training data with the tuning method, in particular leaving at least one group of the groups unaltered in the tuning.

Fig. 1

EP 4 718 285 A1

**Description**

Background

The invention relates to a device, a data structure and a method for tuning weights of a neural network of a model.
In deep learning, a pretrained model may be tuned in particular to adapt general knowledge from the pretrained model to a specific downstream task.

Disclosure of the invention

The computer implemented method according to claim 1 efficiently tunes different groups of weights of a neural network of a model with selected tuning methods.
The method for tuning weights of a neural network of a model for processing input of the model in particular comprising or representing information about a technical system and outputting an output of the model in particular for operating a technical system, characterized in that the model comprises an in particular linear layer for mapping a multidimensional input of the layer depending on the weights to a multidimensional output of the layer, wherein the model is configured to determine the input of the layer depending on the input of the model, wherein the model is configured to determine the output of the model depending on the output of the layer, wherein the method comprises providing training data comprising the input of the model and a ground truth for the output of the model corresponding to the input of the model in the training data, providing a set of tuning methods for tuning the weights, determining the principal components decomposition of a weight matrix comprising the weights, wherein the principal component decomposition comprises a matrix formed by the eigenvectors of the covariance matrix of the weight matrix, determining the eigenvalues of the covariance matrix corresponding to the eigenvectors, rearranging the eigenvectors in the matrix in an order resulting in a monotonically decreasing order of the eigenvalues that are associated with the eigenvectors, rearranging the weights in the weight matrix according to the order in that the eigenvectors are rearranged in the matrix, partitioning the weight matrix into groups of weights, associating at least one group of the groups with a method of tuning selected from the set of tuning methods, and tuning the weights in the at least one group on the training data with the tuning method, in particular leaving at least one group of the groups unaltered in the tuning
The method decomposes the pretrained weights as in a Principal Components Analysis (PCA), and finetunes different Principal Components (PCs) in different manners, i.e. finetuning differently at different hierarchies, or simply finetuning the main PCs while keeping the other ones unaltered. This allows for a more-surgical finetuning acting on the most relevant parts of the pretrained weight matrices, depending on the task at hand.
In addition, updating only a portion of the pretrained matrices, allows to save memory and computational resources by updating a smaller number of parameters
The method may comprise associating a first group of the groups with a first tuning method, for example ETHER, selected from the set of tuning methods, and tuning the weights in the first group with the first tuning method, and associating a second group of the groups with a second tuning method, for example LoRA or OFT, selected from the set of tuning methods and tuning the weights in the second group with the second tuning method.
For acting on linear layers, the method may comprise providing the neural network with a plurality of linear layers that are defined depending on a respective weight matrix, wherein the method comprises determining the principal component decomposition of the respective weight matrix, wherein the principal component decomposition comprises a respective matrix formed by the eigenvectors of the covariance matrix of the respective weight matrix, partitioning the respective weight matrix depending on the eigenvalues of the respective covariance matrix into respective groups, associating at least one group of the respective groups with a respective tuning method selected from the set of tuning methods, and tuning the weights in the respective at least one group on the training data with the respective tuning method associated with the respective at least one group.
For processing with arbitrary group cardinality, partitioning the weight matrix depending on the eigenvalues of the covariance matrix into groups may comprise providing the sizes of the groups, and partitioning the weight matrix into the groups of the provided sizes. The size may be provided in accordance with the group cardinality.
For a unique action, the method may comprises tuning the weight matrix in iterations, and determining the principal component decomposition and the groups once for the iterations.
For iterative action, the method may comprise tuning the weight matrix in iterations, and determining the principal component decomposition and the groups in at least two of the iterations.
For directional or omni-directional finetuning, associating at least one group of the groups with the tuning method may comprise determining the tuning method depending on the eigenvalues, in particular providing the first tuning method and the second tuning method, and selecting the first tuning method if the eigenvalues exceed a threshold, and selecting the second tuning method otherwise.
For cleaning the method from lowest impact groups, the tuning the weights may comprise determining a lower resolution representation of the weight matrix depending on the matrix formed by the eigenvectors, wherein the eigenvectors of the matrix formed by the eigenvectors that correspond to an eigenvalue that is less than a threshold are discarded when determining the lower resolution representation eigenvalues, wherein the lower resolution representation comprises weights, learning the weights of the lower resolution representation on the training data, and determining the weights of the weight matrix depending on the weights of the lower resolution representation.

The input of the model may represent or comprise a sensor signal, and wherein the output of the model and the ground truth represents or comprises a classification of the sensor signal, or wherein the input of the model represents or comprises text, and the output of the model and the ground truth represents or comprises a digital image and/or or an audio signal, or wherein the input of the model represents or comprises text and a semantic map, and the output of the model and the ground truth represents or comprises a digital image, or wherein the input represents or comprises at least one operating quantity of the technical system and the output of the model and the ground truth represents or comprises a sensor signal.

The method may comprise receiving the input of the model that comprises or represents information about a technical system, determining an output of the model that the model outputs for the input of the model, and outputting the output of the model and/or operating (226) the technical system depending on the output of the model.

The device for tuning weights of a neural network of a model for processing input of the model in particular comprising or representing information about a technical system and outputting an output of the model in particular for operating a technical system comprises at least one processor and at least one memory, wherein the at least one memory comprises instructions that are executable by the at least one processor, and that, when executed by the at least one processor cause the device to execute the method.

A computer program may comprise instructions that are executable by a computer and that, when executed by the computer, cause the computer to execute the method.

A data structure, in particular a computer implemented data structure, for tuning weights of a neural network of a model for processing input of the model in particular comprising or representing information about a technical system and outputting an output of the model in particular for operating a technical system, characterized in that the data structure comprises at least one data field for the model, wherein the model comprises an in particular linear layer for mapping a multidimensional input of the layer depending on the weights to a multidimensional output of the layer, wherein the model is configured to determine the input of the layer depending on the input of the model, wherein the model is configured to determine the output of the model depending on the output of the layer, wherein the data structure comprises at least one data field for training data comprising the input of the model and a ground truth for the output of the model corresponding to the input of the model in the training data, wherein the data structure comprises at least one data field for a set of tuning methods for tuning the weights, wherein the data structure comprises at least one data field for the principal components decomposition of a weight matrix comprising the weights, wherein the principal component decomposition comprises a matrix formed by the eigenvectors of the covariance matrix of the weight matrix, wherein the data structure comprises at least one data field for the eigenvalues of the covariance matrix corresponding to the eigenvectors, wherein the data structure comprises at least one data field for associating at least one group of weights of the weight matrix with a method of tuning selected from the set of tuning methods.

Further embodiments are derived from the following description and the drawing. In the drawing,

Fig. 1 schematically depicts a device for a model to tasks,
Fig. 2 schematically depicts a flow chart comprising steps of a method for the model to the tasks,
Fig. 3 schematically depicts a data structure for adapting the model to tasks.

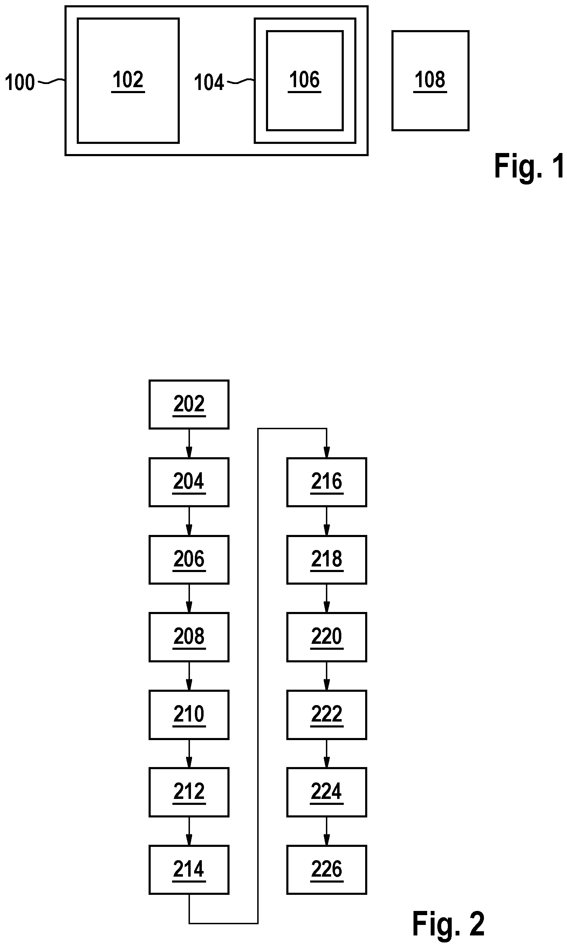

Figure 1 schematically depicts a device 100. The device 100 comprises at least one processor 102 and at least one memory 104. The at least one memory 104 stores instructions. The at least one processor 102 is configured to execute the instructions.

The device 100 is configured for executing a method for tuning weights of a neural network of a model 106.

The instructions, when executed by the at least one processor, cause the device 100 to execute the method.

In the example, the at least one memory 104 stores the model 106.

The model 106 may be configured to receive input that comprises or represents information about a technical system 108. The model 106 may be configured to determine an output of the model 106 for operating the technical system 108 depending on the input of the model 106.

The technical system 108 may be a robot, in particular a vehicle. The technical system 108 may be a computer controlled machine, in particular a manufacturing machine, a power tool, a household appliance, or a personal assist system.

The model 106 may be configured for outputting, depending on the input of the model 106, a classification, a digital image, audio data, or video data, or virtual sensor data. The input may comprise sensor data, e.g. a digital image, audio data, or video data, radar data, LiDAR data, ultrasonic sensor data, motion sensor data, or thermal image sensor data. The input may comprise time series data.

The model 106 may be configured for be used for classifying the sensor data, detecting the presence of objects in the sensor data or performing a semantic segmentation on the sensor data, e.g. regarding traffic signs, road surfaces, pedestrians, or vehicles. This may be carried out based on low-level features, e.g. edges or pixel attributes for images.

The model 106 may be configured for determining a continuous value or multiple continuous values, i.e., perform a regression analysis, e.g., regarding a distance, a velocity, an acceleration, or tracking an item, e.g., an object, in the data. This may be carried out based on low-level features, e.g. edges or pixel attributes for images.

According to an example, the model 106 is a neural network that is configured to determine the output of the model 106 depending on an input of the model 106.

The neural network comprises at least on layer, that is configured to determine an output of the layer depending on an input of the layer.

According to an example, the neural network comprises a series of layers. The series of layers comprises an input layer, that is configured to receive the input of the model. The series of layers comprises an output layer that is configured to output the output of the model. The neural network comprises at least one layer l between the input layer and the output layers. A layer l that is arranged between the input layer and the output layer is configured to determine an output y of the layer depending on an input x of the layer, weights $W \in \mathbb{R}^{d \times f}$ and an optional bias $b \in \mathbb{R}^{f}$:

$$y = W^T x + b$$

According to an example, the input x of a layer $l_i$ of a series of n layers $l_i$, $i = 1, ..., n$ that are arranged between the input layer and the output layer is determined with an activation function $\phi$ depending on the output $y_i$ of a layer $l_{i-1}$ preceding the layer $l_i$ $x = \phi(y)$ a plurality of layers.

According to the example, the model 106 is pretrained. According to the example, the weights W are pretrained.

The input of the first layer $l_0$ is the input of the model 106. The output of the last layer $l_n$ is the output of the model 106.

The weights may be tuned with different Parameter Efficient FineTuning (PEFT) methods of a set of tuning methods.

Exemplary summation based PEFT methods of the set of tuning methods are

LoRA: E. J. Hu, Y. Shen, P. Wallis, Z. Allen-Zhu, Y. Li, S. Wang, L. Wang, and W. Chen, "LoRA: Low-rank adaptation of large language models," in ICLR, 2022.

VeRA: D. J. Kopiczko, T. Blankevoort, and Y. M. Asano, "VeRA: Vector-based Random Matrix Adaptation," Oct. 2023. arXiv:2310.11454 [cs].

DyLoRA: M. Valipour, M. Rezagholizadeh, I. Kobyzev, and A. Ghodsi, "DyLoRA: Parameter Efficient Tuning of Pre-trained Models using Dynamic Search-Free Low-Rank Adaptation," Apr. 2023. arXiv:2210.07558 [cs].

AdaLoRA: Q. Zhang, M. Chen, A. Bukharin, P. He, Y. Cheng, W. Chen, and T. Zhao, "Adaptive Budget Allocation for Parameter-Efficient Fine-Tuning," Mar. 2023. arXiv:2303.10512 [cs].

DoRA: S.-Y. Liu, C.-Y. Wang, H. Yin, P. Molchanov, Y.-C. F. Wang, K.-T. Cheng, and M.-H. Chen, "Dora: Weight-decomposed low-rank adaptation," 2024.

The summation based PEFT methods update the original network's weights via matrix-addition:

$$W' = W + AB$$

where the low rank matrix AB has learnable parameters.

Exemplary multiplication based PEFT methods of the set of tuning methods update the original network's weights via matrix-multiplication:

$$W' = HW$$

where H is a learnable parameter-efficient transformation.

An example for a multiplication based PEFT method is OFT: Z. Qiu, W. Liu, H. Feng, Y. Xue, Y. Feng, Z. Liu, D. Zhang, A. Weller, and B. Schölkopf, "Controlling text-to-image diffusion by orthogonal finetuning," arXiv preprint arXiv:2306.07280, 2023.

An example for a multiplication based PEFT method is ETHER and ETHER+: M. Bini, K. Roth, Z. Akata, and A. Khoreva, "Ether: Efficient finetuning of large-scale models with hyperplane reflections," 2024.

According to ETHER, the multiplication based PEFT method comprises a first transformation for adapting the model 106 to the task.

The first transformation represents a hyperplane reflection, in which a hyperplane H reflects a weight $r$ of a weight vector $w \in \mathbb{R}^d$. The weight vector w is a vector of length L. The weight vector w comprises the weights from the weights $W$ that weigh the elements of the multidimensional input $x \in \mathbb{R}^d$ for a single dimension of the output y. The reflected weight r is obtained via a transformation matrix $H \in \mathbb{R}^{d \times d}$:

$$H = I - 2uu^T$$

wherein $u \in \mathbb{R}^d$ is a learnable hyperplane unit normal vector and $uu^T$ is the outer product of the vector $u$ with the transposed $u^T$ of the vector $u$. This means, the vector $u$ has unit length, i.e., the square of the d elements $u_i$ of the vector $u$ sum up to one: $u_1^2 + u_2^2 + \cdots + u_d^2 = 1$.

The matrix $H$ corresponding to the first transformation has a constant Frobenius distance with respect to the Identity matrix $I \in \mathbb{R}^{d \times d}$.

According to the example, the reflected weight r is a vector that has to retain length L.

The reflected weight $r$ of the weight vector w is determined depending on the transformation:

$$Hw = (I - 2uu^T)w = w - 2u(u^Tw)$$

Based on the transformation $H$, the output y of the adapted layer depends on the forward pass $(HW)^Tx + b$.

According to ETHER+ the multiplication based PEFT method comprises a second exemplary transformation for adapting the model 106 to the task.

The second transformation involves two interacting hyperplanes, a first hyperplane $H_1$ and a second hyperplane $H_2$. For adapting a layer, two distinct transformation matrices $H^+$ and $\hat{H}^+$ of the second transformation are learned.

The first hyperplane $H_1$ and the second hyperplane $H_2$ are used for a transformation, involving the interaction of the first hyperplane $H_1$ and the second hyperplane $H_2$ of a weight vector $w \in \mathbb{R}^d$ for determining a resulting transformed weight r. The resulting transformed weight r does not need to retain length L. The length of the resulting transformed weight r is not equal to the length L. The weight vector w comprises the weights from the weights $W$ that weigh the elements of the multidimensional input $x \in \mathbb{R}^d$ for a single dimension of the output y.

The output y of the adapted layer depends on the forward pass $(H^+W\hat{H}^+)^T x + b$.

The transformation matrix $H^+ \in \mathbb{R}^{d \times d}$ is obtained as:

$$H^+ = I - uu^T + vv^T$$

wherein $u \in \mathbb{R}^d$ is a first learnable hyperplane unit normal vector associated with the first hyperplane $H_1$, wherein $v \in \mathbb{R}^d$ is a second learnable hyperplane unit normal vector associated with the second hyperplane $H_2$, wherein $uu^T$ is the outer product of the first vector $u$ with the transposed $u^T$ of the first vector $u$, and wherein $vv^T$ is the outer product of the second vector $v$ with the transposed $v^T$ of the second vector $v$. The first vector $u$ has unit length, i.e., the square of the d elements $u_i$ of the vector $u$ sum up to one: $u_1^2 + u_2^2 + \cdots + u_d^2 = 1$. The second vector $v$ has unit length, i.e., the square of the d elements $v_i$ of the vector $v$ sum up to one: $v_1^2 + v_2^2 + \cdots + v_d^2 = 1$.

The matrix $H^+$ of the second transformation has a bounded Frobenius distance with respect to the Identity matrix $I \in \mathbb{R}^{d \times d}$.

The transformation matrix $H^+$ of the column weight vector w is determined depending on:

$$H^+w = (I - uu^T + vv^T)w = w - u(u^Tw) + v(v^Tw)$$

The transformation matrix $\hat{H}^+ \in \mathbb{R}^{f \times f}$ is obtained accordingly as:

$$\hat{H}^+ = I - \hat{u}\hat{u}^T + \hat{v}\hat{v}^T$$

with a learnable first vector $\hat{u} \in \mathbb{R}^f$ and a learnable second vector $\hat{v} \in \mathbb{R}^f$. The first vector $\hat{u}$ has unit length. The second vector $\hat{v}$ has unit length.

The matrix $\hat{H}^+$ of the second transformation has a bounded Frobenius distance with respect to the Identity matrix $I \in \mathbb{R}^{f \times f}$.

The transformation matrix $\hat{H}^+$ of the row weight vector $\hat{w}^T \in \mathbb{R}^f$ is determined depending on:

$$\hat{w}^T \hat{H}^+ = \hat{w}^T (I - \hat{u}\hat{u}^T + \hat{v}\hat{v}^T) = \hat{w}^T - (\hat{w}^T \hat{u})\hat{u}^T + (\hat{w}^T \hat{v})\hat{v}^T$$

The transformation matrices $H^+$, $\hat{H}^+$ are learned with a method for adapting the model 106. This means, the respective first vector $u$, $\hat{u}$ and the respective second vector $v$, $\hat{v}$ are learned.

An example for a PEFT method of the set of tuning methods that updates the biases instead of the weights is BitFit: E. B. Zaken, S. Ravfogel, and Y. Goldberg, "Bitfit: Simple parameter-efficient fine-tuning for transformer-based masked language-models," 2022.

The PEFT methods may introduce diversity in the pool of experts of a same category, by using experts with different expressive power.

For LoRA, experts with different ranks may be used. For ETHER+ a scaling term $\lambda$ may be used that scales the boundary of the second transformation, such that

$$H = I - \lambda(uuT - vvT)$$

Figure 2 schematically depicts a flow chart comprising steps of the method for tuning weights of the neural network of the model 106.

The method is described by way of example for processing input of the model 106 comprising or representing information about the technical system 108

The method is described by way of example for outputting output of the model 106 for operating the technical system 108.

The method is described by way of example of linear layers for mapping the multidimensional input of the respective layer depending on the weights of the respective linear layer to the multidimensional output of the respective layer. The model 106 is configured to determine the input of the respective layer depending on the input of the model 106.

The model 106 is configured to determine the output of the model 106 depending on the output of the layer respective. The method may comprise tuning only one layer. The model 106 may comprise only one layer that is tunable by the method.

The method comprises a step 200.

The step 200 comprises providing the model 106. Providing the model 106 comprises providing the neural network with at least one linear layer that is defined depending on the weight matrix of the at least one layer. The neural network may be provided with a plurality of linear layers that are defined depending on a respective weight matrix.

The method comprises a step 202.

The step 202 comprises providing training data comprising the input of the model 106 and a ground truth for the output of the model 106 corresponding to the input of the model 106 in the training data.

The input of the model 106 may represent or comprises a sensor signal. The output of the model 106 and the ground truth may represent or comprise a classification of the sensor signal.

The input of the model 106 may represent or comprise text, and the output of the model 106 and the ground truth may represent or comprise a digital image and/or or an audio signal.

The input of the model 106 may represent or comprise text and a semantic map. The output of the model 106 and the ground truth may represent or comprises a digital image.

The input may represent or comprise at least one operating quantity of the technical system 108 and the output of the model 106 and the ground truth may represent or comprise a sensor signal.

The method comprises a step 204.

The step 204 comprises providing the set of tuning methods for tuning the weights.

The method comprises a step 206.

The step 206 comprises determining the principal components decomposition

$$T = WP$$

of the weight matrix $W$ comprising the weights of the layer.

The principal component decomposition comprises a matrix $P$ formed by the eigenvectors of the covariance matrix $W^T W/(n - 1)$ of the weight matrix $W$.

The method may comprise Acting on Linear Layers $l$. Acting on linear layers $l$ may comprise determining the principal component decomposition $T_l = W_l P_l$ of the respective weight matrix $W_l$, wherein the principal component decomposition comprises a respective matrix $P$ formed by the eigenvectors of the covariance matrix $W_l^T W_l/(n - 1)$ of the respective weight matrix $W_l$

The method comprises a step 208.

The step 208 comprises determining the eigenvalues of the covariance matrix corresponding to the eigenvectors.

The method comprises a step 210.

The step 210 comprises rearranging the eigenvectors in the matrix $P$ in an order resulting in a monotonically decreasing order of the eigenvalues that are associated with the eigenvectors.

The method comprises a step 212.

The step 212 comprises rearranging the weights in the weight matrix $W$ according to the order in that the eigenvectors are rearranged in the matrix $P$.

The method comprises a step 214.

The step 214 comprises partitioning the weight matrix W into groups of weights.

Acting on linear layers $l$ may comprise partitioning the respective weight matrix $W_l$ depending on the eigenvalues of the respective covariance matrix into respective groups.

For arbitrary group cardinality, the weight matrix $W$ may be partitioned into groups of a respective provided size depending on the eigenvalues of the covariance matrix. The sizes of the groups may be predetermined or provided by a user.

The method comprises a step 216.

The step 216 comprises associating at least one group of the groups with a method of tuning selected from the set of tuning methods.

For example, a first group of the groups is associated with a first tuning method, for example ETHER.

For example a second group of the groups is associated with a second tuning method, for example LoRA or OFT.

Acting on linear layers $l$ may comprise associating at least one group of the respective groups with a respective tuning method selected from the set of tuning methods.

To distinguish between directional or omni-directional tuning, the tuning method may be determined depending on the eigenvalues.

For example, the first tuning method is selected if the eigenvalues exceed a threshold, and the second tuning method is selected otherwise.

The method comprises a step 218.

The step 218 comprises tuning the weights in the at least one group on the training data with the tuning method.

The step 218 may comprise tuning a subset of the groups. The step 218 may comprise leaving at least one group of the groups unaltered in the tuning.

Acting on linear layers $l$ may comprise tuning the weights in the respective at least one group on the training data with the respective tuning method associated with the respective at least one group.

For a unique action, the weight matrix is tuned in iterations, and the principal component decomposition and the groups are determined once for the iterations.

For iterative action, the weight matrix is tuned in iterations, and the principal component decomposition and the groups are determined in at least two of the iterations or in all iterations.

For cleaning from lowest-impact groups, a lower resolution representation of the weight matrix $W$ may be determined depending on the matrix $P$ formed by the eigenvectors. For example, the eigenvectors of the matrix $P$ that correspond to an eigenvalue that is less than a threshold are discarded when determining the lower resolution representation eigenvalues. The lower resolution representation comprises weights that are learned in the tuning. The weights of the weight matrix $W$ are determined depending on the weights of the lower resolution representation.

Further finetuning options per each group are:

Low-Rank Full-Finetuning: The full pretrained weight matrix $W$ may be partitioned into groups, and the groups may be fully finetuned directly, in practice doing a low-rank finetuning on the PC of interest based on the size of the group.

Low-Rank Parameter-Efficient Finetuning: The full pretrained weight matrix $W$ may be partitioned into low-rank groups, i.e., summed groups. This enables the use of computationally cheaper PEFT techniques on these groups directly.

PC-eigenvalue-distribution-aware Finetuning: Finetuning transformation such as ETHER are strongly directional, while other finetuning methods, e.g., Full Finetuning, LoRA, OFT, are omni-directional. The method may comprise performing this analysis for pretrained weight matrices, which show directionality or not by the distribution of their corresponding PCs.

The method may use this knowledge for a PC-eigenvalues-distribution-aware finetuning, by associating appropriate transformations to the pretrained weights

The method may comprise reducing computational and storage requirements by SliceGPT truncation. The method may use the procedure described in S. Ashkboos, M. L. Croci, M. G. do Nascimento, T. Hoefler, and J. Hensman, "Slicegpt: Compress large language models by deleting rows and columns," 2024 (SliceGPT) to reduce the dimensionality of the model's hidden dimensions and consequently the dimension of the pretrained weight matrix W to compress the model 106 and reduce its size. This leads to improved results in case the slicing helps cleaning from noisy information.

The method may comprise a step 220.

The step 220 comprises receiving the input of the model 106 that comprises or represents the information about the technical system 108.

The method may comprise a step 222.

The step 222 comprises determining the output of the model 106 that the model 106 comprising the tuned weights outputs for the input of the model 106.

The method may comprise a step 224.

The step 224 comprises outputting the output of the model 106.

The method may comprise a step 226.

The step 226 comprises operating the technical system 108 depending on the output of the model 106.

For example, the technical system 108 is the robot, in particular a vehicle. For example, the input is a digital image, e.g., comprising an object representing a traffic participant or infrastructure.

For example, the output is a classification of the object. The robot may be operated to move the robot on a trajectory that is determined depending on the classification of the object, e.g., to avoid the object or to drive over the object.

For example, the technical system 108 is the computer controlled machine. The computer controlled machine may be operated to produce a workpiece depending on the output of the model 106. The computer controlled machine may comprise a human machine interface or a machine to machine interface. The computer controlled machine may be operated receive the input via the interface and/or to output the output of the model 106 via the interface.

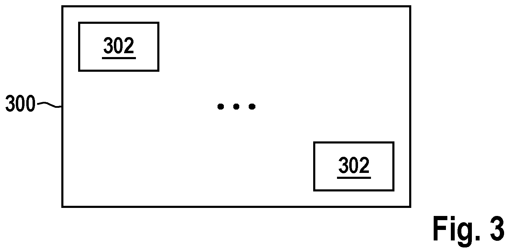

Figure 3 schematically depicts a data structure 300 for tuning the weights of the neural network of the model 106.

The data structure 300 is for example a computer implemented data structure.

The data structure 300 comprises at least one data field 302 for

the model 106
the training data,
the set of tuning methods
the principal components decomposition
the eigenvalues
the association of at least one group of the groups with the method of tuning selected from the set of tuning methods.

**Claims**

1. A computer implemented method for tuning weights of a neural network of a model (106) for processing input of the model (106) in particular comprising or representing information about a technical system (108) and outputting (224) an output of the model (106) in particular for operating (226) a technical system (108), **characterized in that** the model (106) comprises an in particular linear layer for mapping a multidimensional input of the layer depending on the weights to a multidimensional output of the layer, wherein the model (106) is configured to determine the input of the layer depending on the input of the model (106), wherein the model (106) is configured to determine the output of the model (106) depending on the output of the layer, wherein the method comprises providing (202) training data comprising the input of the model (106) and a ground truth for the output of the model (106) corresponding to the input of the model (106) in the training data, providing (204) a set of tuning methods for tuning the weights, determining (206) the principal components decomposition of a weight matrix comprising the weights, wherein the principal component decomposition comprises a matrix formed by the eigenvectors of the covariance matrix of the weight matrix, determining (208) the eigenvalues of the covariance matrix corresponding to the eigenvectors, rearranging (210) the eigenvectors in the matrix in an order resulting in a monotonically decreasing order of the eigenvalues that are associated with the eigenvectors, rearranging (212) the weights in the weight matrix according to the order **in that** the eigenvectors are rearranged in the matrix, partitioning (214) the weight matrix into groups of weights, associating (216) at least one group of the groups with a method of tuning selected from the set of tuning methods, and tuning (218) the weights in the at least one group on the training data with the tuning method, in particular leaving at least one group of the groups unaltered in the tuning.

2. The method according to claim 1, **characterized in that** the method comprises associating (216) a first group of the groups with a first tuning method, for example ETHER, selected from the set of tuning methods, and tuning the weights in the first group with the first tuning method, and associating (216) a second group of the groups with a second tuning method, for example LoRA or OFT, selected from the set of tuning methods and tuning the weights in the second group with the second tuning method.

3. The method according to one of the preceding claims, **characterized in that** the method comprises providing (200) the neural network with a plurality of linear layers that are defined depending on a respective weight matrix, wherein the method comprises determining (206) the principal component decomposition of the respective weight matrix, wherein the principal component decomposition comprises a respective matrix formed by the eigenvectors of the covariance matrix of the respective weight matrix, partitioning (214) the respective weight matrix depending on the eigenvalues of the respective covariance matrix into respective groups, associating (216) at least one group of the respective groups with a respective tuning method selected from the set of tuning methods, and tuning (218) the weights in the respective at least one group on the training data with the respective tuning method associated with the respective at least one group.

4. The method according to one of the preceding claims, **characterized in that** partitioning (214) the weight matrix depending on the eigenvalues of the covariance matrix into groups comprises providing the sizes of the groups, and partitioning the weight matrix into the groups of the provided sizes.

5. The method according to one of the preceding claims, **characterized in that** the method comprises tuning (218) the weight matrix in iterations, and determining the principal component decomposition and the groups once for the iterations.

6. The method according to one of the claims 1 to 4, **characterized in that** the method comprises tuning (218) the weight matrix in iterations, and determining (206) the principal component decomposition and the groups in at least two of the iterations.

7. The method according to one of the preceding claims, **characterized in that** associating (216) at least one group of the groups with the tuning method comprises determining the tuning method depending on the eigenvalues, in particular providing the first tuning method and the second tuning method, and selecting the first tuning method if the eigenvalues exceed a threshold, and selecting the second tuning method otherwise.

8. The method according to one of the preceding claims, **characterized in that** tuning (218) the weights comprises determining a lower resolution representation of the weight matrix depending on the matrix formed by the eigenvectors, wherein the eigenvectors of the matrix formed by the eigenvectors that correspond to an eigenvalue that is less than a threshold are discarded when determining the lower resolution representation eigenvalues, wherein the lower resolution representation comprises weights, learning the weights of the lower resolution representation on the training data, and determining the weights of the weight matrix depending on the weights of the lower resolution representation.

9. The method according to one of the preceding claims, **characterized in that** the input of the model (106) represents or comprises a sensor signal, and wherein the output of the model (106) and the ground truth represents or comprises a classification of the sensor signal, or wherein the input of the model (106) represents or comprises text, and the output of the model (106) and the ground truth represents or comprises a digital image and/or or an audio signal, or wherein the input of the model (106) represents or comprises text and a semantic map, and the output of the model (106) and the ground truth represents or comprises a digital image, or wherein the input represents or comprises at least one operating quantity of the technical system (108) and the output of the model (106) and the ground truth represents or comprises a sensor signal.

10. The method according to one of the preceding claims, wherein the method comprises receiving (220) the input of the model (106) that comprises or represents information about a technical system (108), determining (222) an output of the model (106) that the model (106) outputs for the input of the model (106), and outputting (224) the output of the model (106) and/or operating (226) the technical system (108) depending on the output of the model (106).

11. A device (100) for tuning weights of a neural network of a model (106) for processing input of the model (106) in particular comprising or representing information about a technical system (108) and outputting an output of the model (106) in particular for operating (226) a technical system (108), **characterized in that** the device (100) comprises at least one processor (102) and at least one memory (104), wherein the at least one memory (104) comprises instructions that are executable by the at least one processor (102), and that, when executed by the at least one processor (102) cause the device (100) to execute the method according to one of the preceding claims.

12. A computer program, **characterized in that** the computer program comprises instructions that are executable by a computer and that, when executed by the computer, cause the computer to execute the method according to one of the claims 1 to 10.

13. A data structure (300), in particular a computer implemented data structure, for tuning weights of a neural network of a model (106) for processing input of the model (106) in particular comprising or representing information about a technical system (108) and outputting (224) an output of the model (106) in particular for operating (226) a technical system (108), **characterized in that** the data structure (300) comprises at least one data field (302) for the model (106), wherein the model comprises an in particular linear layer for mapping a multidimensional input of the layer depending on the weights to a multidimensional output of the layer, wherein the model (106) is configured to determine the input of the layer depending on the input of the model (106), wherein the model (106) is configured to determine the output of the model (106) depending on the output of the layer, wherein the data structure (300) comprises at least one data field (302) for training data comprising the input of the model (106) and a ground truth for the output of the model (106) corresponding to the input of the model (106) in the training data, wherein the data structure (300) comprises at least one data field (302) for a set of tuning methods for tuning the weights, wherein the data structure (300) comprises at least one data field (302) for the principal components decomposition of a weight matrix comprising the weights, wherein the principal component decomposition comprises a matrix formed by the eigenvectors of the covariance matrix of the weight matrix, wherein the data structure (300) comprises at least one data field (302) for the eigenvalues of the covariance matrix corresponding to the eigenvectors, wherein the data structure (300) comprises at least one data field (302) for associating at least one group of weights of the weight matrix with a method of tuning selected from the set of tuning methods.

**Amended claims in accordance with Rule 137(2) EPC.**

1. A computer implemented method for operating a technical system (108) depending on an output of a neural network of a model (106) for processing input of the model (106) comprising or representing information about the technical system (108), **characterized in that** the method comprises receiving (220) the input of the model (106), determining (222) the output of the model (106) that the model (106) outputs for the input of the model (106), and outputting (224) the output of the model (106) for operating (226) the technical system (108) depending on the output of the model (106), wherein the model (106) comprises an in particular linear layer for mapping a multidimensional input of the layer depending on the weights to a multidimensional output of the layer, wherein the model (106) is configured to determine the input of the layer depending on the input of the model (106), wherein the model (106) is configured to determine the output of the model (106) depending on the output of the layer, wherein the method comprises providing (202) training data comprising the input of the model (106) and a ground truth for the output of the model (106) corresponding to the input of the model (106) in the training data, providing (204) a set of tuning methods for tuning the weights, determining (206) the principal components decomposition of a weight matrix comprising the weights, wherein the principal component decomposition comprises a matrix formed by the eigenvectors of the covariance matrix of the weight matrix, determining (208) the eigenvalues of the covariance matrix corresponding to the eigenvectors, rearranging (210) the eigenvectors in the matrix in an order resulting in a monotonically decreasing order of the eigenvalues that are associated with the eigenvectors, rearranging (212) the weights in the weight matrix according to the order **in that** the eigenvectors are rearranged in the matrix, partitioning (214) the weight matrix into groups of weights, associating (216) at least one group of the groups with a method of tuning selected from the set of tuning methods, and tuning (218) the weights in the at least one group on the training data with the tuning method, in particular leaving at least one group of the groups unaltered in the tuning, wherein the input comprises sensor data, wherein the sensor data comprises a digital image, audio data, or video data, radar data, LiDAR data, ultrasonic sensor data, motion sensor data, or thermal image sensor data, wherein the output is a classification of the object to avoid the object or to drive over the object, wherein the technical system (108) is a robot, in particular a vehicle, wherein the input comprises an object representing a traffic participant or infrastructure, wherein the output is a classification of the object, wherein the classification of the object is to avoid the object or to drive over the object, wherein the robot is operated to move the robot on a trajectory that is determined depending on the classification of the object to avoid the object or to drive over the object.

2. The method according to claim 1, **characterized in that** the method comprises associating (216) a first group of the groups with a first tuning method, for example ETHER, selected from the set of tuning methods, and tuning the weights in the first group with the first tuning method, and associating (216) a second group of the groups with a second tuning method, for example LoRA or OFT, selected from the set of tuning methods and tuning the weights in the second group with the second tuning method.

3. The method according to one of the preceding claims, **characterized in that** the method comprises providing (200) the neural network with a plurality of linear layers that are defined depending on a respective weight matrix, wherein the method comprises determining (206) the principal component decomposition of the respective weight matrix, wherein the principal component decomposition comprises a respective matrix formed by the eigenvectors of the covariance matrix of the respective weight matrix, partitioning (214) the respective weight matrix depending on the eigenvalues of the respective covariance matrix into respective groups, associating (216) at least one group of the respective groups with a respective tuning method selected from the set of tuning methods, and tuning (218) the weights in the respective at least one group on the training data with the respective tuning method associated with the respective at least one group.

4. The method according to one of the preceding claims, **characterized in that** partitioning (214) the weight matrix depending on the eigenvalues of the covariance matrix into groups comprises providing the sizes of the groups, and partitioning the weight matrix into the groups of the provided sizes.

5. The method according to one of the preceding claims, **characterized in that** the method comprises tuning (218) the weight matrix in iterations, and determining the principal component decomposition and the groups once for the iterations.

6. The method according to one of the claims 1 to 4, **characterized in that** the method comprises tuning (218) the weight matrix in iterations, and determining (206) the principal component decomposition and the groups in at least two of the iterations.

7. The method according to one of the preceding claims, **characterized in that** associating (216) at least one group of the groups with the tuning method comprises determining the tuning method depending on the eigenvalues, in particular providing the first tuning method and the second tuning method, and selecting the first tuning method if the eigenvalues exceed a threshold, and selecting the second tuning method otherwise.

8. The method according to one of the preceding claims, **characterized in that** tuning (218) the weights comprises determining a lower resolution representation of the weight matrix depending on the matrix formed by the eigenvectors, wherein the eigenvectors of the matrix formed by the eigenvectors that correspond to an eigenvalue that is less than a threshold are discarded when determining the lower resolution representation eigenvalues, wherein the lower resolution representation comprises weights, learning the weights of the lower resolution representation on the training data, and determining the weights of the weight matrix depending on the weights of the lower resolution representation.

9. The method according to one of the preceding claims, **characterized in that** the input of the model (106) represents or comprises a sensor signal, and wherein the output of the model (106) and the ground truth represents or comprises a classification of the sensor signal, or wherein the input of the model (106) represents or comprises text, and the output of the model (106) and the ground truth represents or comprises a digital image and/or or an audio signal, or wherein the input of the model (106) represents or comprises text and a semantic map, and the output of the model (106) and the ground truth represents or comprises a digital image, or wherein the input represents or comprises at least one operating quantity of the technical system (108) and the output of the model (106) and the ground truth represents or comprises a sensor signal.

10. A device (100) for operating a technical system (108) depending on an output of a neural network of a model (106) for processing input of the model (106) comprising or representing information about a technical system (108) and outputting an output of the model (106) for operating (226) the technical system (108), **characterized in that** the device (100) comprises at least one processor (102) and at least one memory (104), wherein the at least one memory (104) comprises instructions that are executable by the at least one processor (102), and that, when executed by the at least one processor (102) cause the device (100) to execute the method according to one of the preceding claims.

11. A computer program, **characterized in that** the computer program comprises instructions that are executable by a computer and that, when executed by the computer, cause the computer to execute the method according to one of the claims 1 to 9.

12. A data structure (300), in particular a computer implemented data structure, for operating a technical system (108) depending on an output of a neural network of a model (106) for processing input of the model (106) comprising or representing information about the technical system (108) and outputting (224) an output of the model (106) for operating (226) the technical system (108), **characterized in that** the data structure (300) comprises at least one data field (302) for the model (106), wherein the model comprises an in particular linear layer for mapping a multidimensional input of the layer depending on the weights to a multidimensional output of the layer, wherein the model (106) is configured to determine the input of the layer depending on the input of the model (106), wherein the model (106) is configured to determine the output of the model (106) depending on the output of the layer, wherein the data structure (300) comprises at least one data field (302) for training data comprising the input of the model (106) and a ground truth for the output of the model (106) corresponding to the input of the model (106) in the training data, wherein the data structure (300) comprises at least one data field (302) for a set of tuning methods for tuning the weights, wherein the data structure (300) comprises at least one data field (302) for the principal components decomposition of a weight matrix comprising the weights, wherein the principal component decomposition comprises a matrix formed by the eigenvectors of the covariance matrix of the weight matrix, wherein the data structure (300) comprises at least one data field (302) for the eigenvalues of the covariance matrix corresponding to the eigenvectors, wherein the data structure (300) comprises at least one data field (302) for associating at least one group of weights of the weight matrix with a method of tuning selected from the set of tuning methods.

Fig. 1

Fig. 2

300 —

302

• • •

302

**Fig. 3**

Europäisches
Patentamt

European
Patent Office

Office européen
des brevets

# EUROPEAN SEARCH REPORT

**Application Number**

EP 24 20 2640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Brohan Anthony ET AL: "RT-2: Vision-Language-Action Models Transfer Web Knowledge to Robotic Control", , 28 July 2023 (2023-07-28), pages 1-26, XP093246452, Retrieved from the Internet: URL:https://arxiv.org/pdf/2307.15818 * abstract * * Section 3.1 * * Section 3.2 * * Section D * * figure 1 * ----- | 1-13 | INV. G06F16/906 G06N3/00 |
| A | ZEYU HAN ET AL: "Parameter-Efficient Fine-Tuning for Large Models: A Comprehensive Survey", ARXIV.ORG, CORNELL UNIVERSITY LIBRARY, 201 OLIN LIBRARY CORNELL UNIVERSITY ITHACA, NY 14853, 17 April 2024 (2024-04-17), XP091730235, * abstract * * Section II.B * * Section III.A * * Section III.C * * figure 8 * ----- | 1-13 | |
| A | MOJTABA VALIPOUR ET AL: "DyLoRA: Parameter Efficient Tuning of Pre-trained Models using Dynamic Search-Free Low-Rank Adaptation", ARXIV.ORG, CORNELL UNIVERSITY LIBRARY, 201 OLIN LIBRARY CORNELL UNIVERSITY ITHACA, NY 14853, 19 April 2023 (2023-04-19), XP091487254, * the whole document * ----- | 1-13 | TECHNICAL FIELDS SEARCHED (IPC) G06F G06N |

The present search report has been drawn up for all claims

| Place of search | Date of completion of the search | Examiner |
|---|---|---|
| Berlin | 5 February 2025 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. J. HU** ; **Y. SHEN** ; **P. WALLIS** ; **Z. ALLEN-ZHU** ; **Y. LI** ; **S. WANG** ; **L. WANG** ; **W. CHEN**. LoRA: Low-rank adaptation of large language models. *ICLR*, 2022
- **D. J. KOPICZKO** ; **T. BLANKEVOORT** ; **Y. M. ASANO**. VeRA: Vector-based Random Matrix Adaptation. *arXiv:2310.11454*, October 2023
- **M. VALIPOUR** ; **M. REZAGHOLIZADEH** ; **I. KOBYZEV** ; **A. GHODSI**. DyLoRA: Parameter Efficient Tuning of Pre-trained Models using Dynamic Search-Free Low-Rank Adaptation. *arXiv:2210.07558*, April 2023
- **Q. ZHANG** ; **M. CHEN** ; **A. BUKHARIN** ; **P. HE** ; **Y. CHENG** ; **W. CHEN** ; **T. ZHAO**. Adaptive Budget Allocation for Parameter-Efficient Fine-Tuning. *arXiv:2303.10512*, March 2023

- **S.-Y. LIU** ; **C.-Y. WANG** ; **H. YIN** ; **P. MOLCHANOV** ; **Y.-C. F. WANG** ; **K.-T. CHENG** ; **M.-H. CHEN**. *Dora: Weight-decomposed low-rank adaptation*, 2024
- **Z. QIU** ; **W. LIU** ; **H. FENG** ; **Y. XUE** ; **Y. FENG** ; **Z. LIU** ; **D. ZHANG** ; **A. WELLER** ; **B. SCHÖLKOPF**. Controlling text-to-image diffusion by orthogonal finetuning. *arXiv preprint arXiv:2306.07280*, 2023
- **M. BINI** ; **K. ROTH** ; **Z. AKATA** ; **A. KHOREVA**. *Ether: Efficient finetuning of large-scale models with hyperplane reflections*, 2024
- **E. B. ZAKEN** ; **S. RAVFOGEL** ; **Y. GOLDBERG**. *Bitfit: Simple parameter-efficient fine-tuning for transformer-based masked language-models*, 2022
- **S. ASHKBOOS** ; **M. L. CROCI** ; **M. G. DO NASCIMENTO** ; **T. HOEFLER** ; **J. HENSMAN**. *Slicegpt: Compress large language models by deleting rows and columns*, 2024